# EUROPÄISCHE PATENTSCHRIFT

(11) **EP 2 710 416 B1**
(45) Veröffentlichungstag und Bekanntmachung des Hinweises auf die Patenterteilung: **14.08.2019**
(21) Anmeldenummer: 12720431.1
(22) Anmeldetag: 10.05.2012
(51) Int. Cl.: B42D 25/328, G02B 5/20, G02B 5/18, G02B 5/28

(54) **ZWEIDIMENSIONAL PERIODISCHES, FARBFILTERNDES GITTER**
TWO DIMENSIONAL PERIODIC COLOUR FILTERING GRATING
RÉSEAU À DEUX DIMENSIONS PÉRIODIQUES POUR LE FILTRAGE CHROMATIQUE

(30) Priorität: 16.05.2011 DE 102011101635
(43) Veröffentlichungstag der Anmeldung: 26.03.2014
(73) Patentinhaber: Giesecke+Devrient Currency Technology GmbH, 81677 München (DE)
(72) Erfinder: LOCHBIHLER, Hans, 80337 München (DE); HEIM, Manfred, 83646 Bad Tölz (DE)
(86) Internationale Anmeldenummer: PCT/EP2012/002014
(87) Internationale Veröffentlichungsnummer: WO 2012/156049

(56) Entgegenhaltungen:
- EP-A1- 2 128 665
- US-A1- 2009 226 950
- US-A1- 2010 059 663
- US-A1- 2010 177 094
- US-A1- 2010 328 587
- US-B2- 7 787 182

## Beschreibung

Die Erfindung betrifft ein Sicherheitselement mit einem zweidimensional periodischen, farbfilternden Gitter. Für Sicherheitselemente von Wertdokumenten sind eindimensional periodische Gitter bekannt, beispielsweise aus der DE 102009012299 A1, DE 102009012300 A1 oder der DE 102009056933 A1. Sie können Farbfiltereigenschaften im Subwellenlängenbereich aufweisen, wenn das Gitterprofil so ausgelegt ist, dass Resonanzeffekte im sichtbaren Wellenlängenbereich auftreten. Solche Farbfiltereigenschaften sind sowohl für reflektierende als auch für transmittierende Subwellenlängenstrukturen bekannt. Diese Strukturen haben einen stark polarisierenden Einfluss auf die Reflexion bzw. die Transmission eines einfallenden Lichtstrahls. Wenn das einfallende Licht unpolarisiert ist, schwächt sich die Farbsättigung für diese Gitter deutlich ab. Ferner ist die Farbe in Reflexion bzw. Transmission solcher Subwellenlängengitter relativ stark winkelabhängig.

Zweidimensional periodische Lochstrukturen sind in der wissenschaftlichen Literatur beschrieben, welche im Subwellenlängenbereich Filtereigenschaften des einfallenden Lichtes aufweisen. Hierzu sei auf folgende Literaturstellen verwiesen: T.W: Ebbesen, H. J. Lezec, H. F. Ghaemi, T. Thio, and P. A. Wolf, "Extraordinary optical transmission through sub-wavelength hole arrays", Nature, 667-669 (1998); L. Martín-Moreno, F. J. García-Vidal, H. J. Lezec, K. M. Pellerin, T. Thio, J. B. Pendry, and T. W. Ebbesen, "Theory of extraordinary optical transmission through subwavelength hole arrays", Phys. Rev. Lett. 86(6), 1114-1117 (2001); W.L. Barnes, A. Dereux, T.W. Ebbesen, "Surface plasmon subwavelength optics", Nature, Vol 424, Issue 6950, pp. 824-830 (2003); J. Bravo-Abad, A. Degiron, F. Przybilla, C. Genet, F.J. Garcia-Vidal, L. Martin-Moreno and T.W. Ebbesen "How light emerges from an illuminated array of subwavelength holes", Nature Physics 1, 120-123 (2006); H. S. Lee, Y. T. Yoon, S. S. Lee, S. H. Kim, and K. D. Lee, "Color filter based on a subwavelength patterned metal grating", Opt. Express 15, 15457-15463 (2007); C.-P. Huang, Q.-J. Wang, and Y.-y. Zhu, "Dual effect of surface plasmons in light transmission through perforated metal films", Phys. Rev. B 75, 245421 (2007). Diese sogenannten Hole-Arrays bestehen aus dünnen opaken Metallfilmen. In der DE 102007016394 A1 wird die Verwendung solcher Strukturen als Sicherheitselement in Wertdokumenten zur Echtheitsauthentifizierung vorgeschlagen.

Weiter sind zweidimensional periodische Gitter bekannt, welche eine Farbfilterung in Grundfarben rot, grün, blau bei hoher Farbsättigung über einen relativ großen Blickwinkelbereich erlauben. Die Veröffentlichung B.-H. Cheong, O. N. Prudnikov, E.-H. Cho, H.-S. Kim, Jaeho Yu, Young-Sang Cho, Hwan-Young Choi, and Sung Tae Shin, "High angular tolerant color filter using subwavelength grating", Appl. Phys. Lett. 94, 213104 (2009) beschreibt ein Gitter mit würfelförmigen Erhebungen, das eine ausgeprägte Bandpasscharakteristik aufweist. Die Erhebungen sind aus amorphem Silizium und befinden sich auf einem Glassubstrat. Ein Replikationsverfahren für solche Gitter ist in den Veröffentlichungen E.-H. Cho, H.-S. Kim, Byoung-Ho Cheong, Prudnikov Oleg, Wenxu Xianyua, Jin-Seung Sohn, Dong-Joon Ma, Hwan-Young Choi, No-Cheol Park, and Young-Pil Park, "Two-dimensional photonic crystal color filter development", Opt. Express 17, 8621-8629 (2009) und E.-H. Cho, H.-S. Kim, Jin-Seung Sohn, Chang-Youl Moon, No-Cheol Park, and Young-Pil Park, "Nanoimprinted photonic crystal color filters for solar-powered reflective displays", Opt. Express 18, 27712-27722 (2010) dargestellt. Die Publikationen Yan Ye, Yun zhou, and Linsen Chen, "Color filter based on a two-dimensional submicrometer metal grating", Appl. Opt. 48, 5035-5039 (2009) und Yan Ye, Heng Zhang, Yun Zhou, and Linsen Chen, "Color filter based on a submicrometer cascaded grating", Opt. Commun., 283, 613-616 (2010) schlagen ein zweidimensional periodisches Gitter zur Farbfilterung vor, bei dem die würfelförmigen Erhebungen aus Aluminium und Zinksulfid gebildet werden bzw. sich würfelförmige Erhebungen aus Aluminium auf einer hochbrechenden Schicht befinden. Bislang ist kein brauchbares Herstellungsverfahren für solche Strukturen bekannt. In der WO 2010/126493 A1 ist ein Gitter mit derselben Oberflächengeometrie beschrieben. Es zeigt jedoch keine ausgeprägten Farbfiltereigenschaften. Schließlich sind aus der EP 1434695 B1 zweidimensional periodische Gitter bekannt, welche lichtabsorbierende Eigenschaften aufweisen. Eine wahrnehmbare Lichttransmission haben solche Strukturen aufgrund eines durchgehenden Metallfilms nicht. Ebenfalls sind keine farbfilternden Eigenschaften bekannt.

Aus der US2009/226950A1 ist ein Biosensor bekannt, der eine Gitterstruktur hat, deren optische Eigenschaft sich durch Anlagerung einer zu detektierenden Substanz lokal ändert. Das Messen dieser lokalen Änderung erlaubt es, die Substanz zu detektieren, die beispielsweise in einem Näpfchen einer Mikrotitierplatte vorliegen kann.

Die US2010/0328587A1 und EP2128665A1 betreffen einen Bildsensor, beispielsweise für eine Kamera, der einen durch eine Gitterstruktur erzeugten Farbfilter zur Erzeugung farbiger Bildsignale hat.

Die US2010/0177094A1 betrifft ein Sicherheitselement für ein Wertdokument, das mittels einer Minilinsenanordnung und einer Vielzahl von Mikrobildern ein synthetisches Bild erzeugt, wobei die bilderzeugende Struktur durch herkömmliche Kopiervorgänge nicht vervielfältigt werden kann.

US 7787182 B2 offenbart ein optisches Sicherheitselement, das einen blickwinkelabhängigen Farbeffekt zeigt und mehrschichtig aufgebaut ist. Es weist eine hochbrechende Schicht auf.

Die bekannten zweidimensional periodischen Subwellenlängengitter mit nicht zusammenhängender Oberfläche zeigen zwar ausgeprägte Farbfiltereigenschaften bei einer großen Winkeltoleranz, sind jedoch sehr aufwendig herzustellen. Ein einfaches Replizierungsverfahren ist nicht möglich. Deshalb eignen sich diese Strukturen nicht als Sicherheitselemente für Wertpapiere, insbesondere Banknoten, da hierbei eine einfache Herstellung in großer Stückzahl gefordert wird.

Der Erfindung liegt deshalb die Aufgabe zugrunde, ein zweidimensionales, farbfilterndes Gitter anzugeben, das zum einen eine gute Farbfiltereigenschaft aufweist und sich zum anderen durch kostengünstige Vervielfältigungsverfahren herstellen lässt.

Die Erfindung ist in den unabhängigen Ansprüchen definiert.

Ein Sicherheitselement für ein Wertdokument weist auf: ein zweidimensional periodisches, farbfilterndes Gitter, das eine zusammenhängende hochbrechende, insbesondere metallische, Grundschicht, die eine Gitterebene definiert, und über der Grundschicht ein zweidimensional regelmäßiges Muster aus einzelnen hochbrechenden, insbesondere metallischen, Flächenelementen aufweist, die sich jeweils parallel zur Gitterebene erstrecken und jeweils von der Grundschicht durch ein Zwischen-Dielektrikum um einen Abstand beabstandet sind, der größer ist als die Dicke der Grundschicht und der Flächenelemente, wobei das regelmäßige Muster in mindestens zwei Richtungen, die parallel zur Gitterebene verlaufen, eine Periodizität zwischen 100 nm und 800 nm, bevorzugt zwischen 200 nm und 500 nm hat.

Das Gitter sieht eine hochbrechende Grundschicht sowie hochbrechende Flächenelemente, die über der Grundschicht angeordnet sind, vor. Die hochbrechende Eigenschaft der Grundschicht bzw. der Flächenelemente wird durch eine geeignete Materialwahl erreicht. Neben Metall als Material kommen dabei insbesondere Silizium, Zinksulfid oder Titandioxid in Frage. In dieser Beschreibung wird der Begriff "metallisch" als gleichbedeutend mit "hochbrechend" aufgefasst, soweit nicht ausdrücklich anderes beschrieben ist.

Wesentlich für die Wirkung des Gitters ist es, dass über einer zusammenhängenden metallischen Schicht nicht zusammenhängende, in einem Muster angeordnete Flächenelemente angeordnet sind. Wenn ein zweidimensional periodisches Gitter mit einem Profil, das senkrechte Flanken besitzt, senkrecht metallisch bedampft wird, entsteht ein nicht geschlossener Metallfilm auf Plateaus an der Gitteroberseite. Es bildet sich auf der unteren Gitterfläche (Grundschicht) ein zusammenhängender Metallfilm aus. Die Erhebungen des Profils sind dabei nur auf den Plateaus metallisch überzogen.

Die unbedampfte Gitterstruktur besteht dabei aus einem dielektrischen Material, welches z. B. eine Brechzahl von etwa 1,5 aufweist. Dabei eignen sich besonders Kunststofffolien, z. B. PET-Folien, als Substrat. Die eigentliche Basisstruktur ist z. B. ebenfalls in Kunststoff, bevorzugt UV-Lack, ausgebildet. Nach der Bedampfung wird schließlich die Struktur mit UV-Lack aufgefüllt und mit einer Deckfolie kaschiert. Somit liegt ein Schichtaufbau vor, bei dem die Ober- und die Unterseite im Wesentlichen dieselbe Brechzahl besitzt.

Ferner ist die Beschichtung nicht nur auf einfache metallische Schichten beschränkt. Es sind auch Mehrfachschichten, insbesondere Trilayer denkbar. Es ist bekannt, dass mehrfach beschichtete eindimensional periodische Gitter eine starke Farbfilterfilterung durch die Ausbildung von Fabry-Perot Resonatoren sowohl in Reflexion als auch in Transmission ermöglichen. Bei Trilayer sind folgende Schichten besonders bevorzugt: zwei halbtransparente Metallschichten mit einer dazwischen liegenden dielektrische Abstandsschicht bzw. zwei hoch brechende Schichten mit einer dazwischen liegenden niedrig brechenden Schicht. Für die Metallschichten kommen folgende Materialien in Frage: Al, Ag, Pt, Pd, Au, Cu, Cr und Legierungen davon. Als hochbrechende Schichten eignen sich beispielsweise ZnS, ZnO, TiO₂, ZnSe, SiO, Ta₂O₅ oder Silizium. Als niedrigbrechende Schichten bieten sich SiO₂, Al₂O₃ bzw. MgF2 an.

Bei einem besonders zweckmäßigen Herstellverfahren wird zuerst ein Dielektrikum als Basisstruktur geeignet strukturiert und dann beschichtet. Dann hat die Grundschicht im Bereich unter jedem Flächenelement eine Öffnung. Dies ist zugleich vorteilhaft, da dann auch in Transmission ein optischer Effekt entsteht.

Es ist bevorzugt, dass das Gitter in ein Einbett-Dielektrikum eingebettet ist, welches vorzugsweise dieselbe Brechzahl hat wie das Dielektrikum, welches die Basisstruktur bildet und die Grundschicht von den Flächenelementen beabstandet. Die Brechzahl kann beispielsweise zwischen 1,4 und 1,6 liegen.

Es zeigte sich, dass die Farbeffekte des zweidimensionalen farbfilternden Gitters von der Periodizität des Musters abhängen. Dies wird dazu ausgenutzt, farbige Symbole bzw. Bilder zu erzeugen. Dazu ist der Flächenfüllfaktor und/oder der Abstand zwischen Flächenelementen und Grundschicht lokal variiert. Insbesondere ist es möglich, eine Gruppe mehrerer Flächenelemente mit identischen Abmessungen so zu gestalten, dass ein gewünschter Farbeffekt eintritt. Diese Gruppe bildet dann ein Sub-Pixel. Mehrere Sub-Pixel werden mit unterschiedlichen Farbeigenschaften durch entsprechende geometrische Gestaltung ausgestaltet und dann zu einem Pixel zusammengefasst. Dies erlaubt eine farbige Bilddarstellung. Die unterschiedlichen Farben können dabei durch die entsprechende lokale Variation eines oder mehrerer der Parameter des Gitters (Abstand der Flächenelemente in zwei Raumrichtungen sowie Abstand der Flächenelemente von der Grundschicht) variiert werden.

Durch die pixelweise Farbmischung von Basisfarben, z. B. RGB Farben, in Subpixelbereichen können Echtfarbenbilder hergestellt werden. Der Vorteil von solchen Strukturen gegenüber der herkömmlichen Drucktechnik ist, dass hierbei eine sehr feine Strukturierung bis in den Mikrometerbereich vorgenommen werden kann. Diese Feinstrukturierung eignet sich besonders für Anwendungen in Moire-Vergrößerungsanordnungen, z. B. indem das Gitter so ausgebildet ist, dass es Mikrobilder für Moire-Vergrößerungsanordnungen bereitstellt. Bei Mikrolinsenanordnungen wirkt sich die große Winkeltoleranz der oben beschriebenen zweidimensional periodischen Gitter sehr vorteilhaft aus, denn die Mikrolinsen haben bei Moire-Vergrößerungsanordnungen eine kleine Brennweite bei einem relativ großen Öffnungsverhältnis. Daher zeigen die hier beschriebenen Strukturen eine größere Farbsättigung in der Kombination mit Mikrolinsen als bisher bekannte eindimensional periodische Subwellenlängenstrukturen.

Das zweidimensional periodische Gitter kann insbesondere in einem Sicherheitselement für ein Wertdokument verwendet werden. Es kann insbesondere in einem Sicherheitsfaden, Aufreißfaden, Sicherheitsband, Sicherheitsstreifen, Patch oder Etikett integriert sein. Insbesondere kann das mit dem Gitter versehene Sicherheitselement transparente Bereiche oder Ausnehmungen überspannen.

Das Gitter kann als Sicherheitselement insbesondere Teil einer noch nicht umlauffähigen Vorstufe zu einem Wertdokument sein, das zusätzlich noch weitere Echtheitsmerkmale aufweisen kann. Unter Wertdokumenten werden einerseits Dokumente verstanden, welche mit dem zweidimensionalen Gitter versehen sind. Andererseits können Wertdokumente auch sonstige Dokumente oder Gegenstände sein, die mit dem zweidimensionalen Gitter versehen werden, damit die Wertdokumente nicht kopierbare Echtheitsmerkmale aufweisen, um eine Echtheitsüberprüfung zu ermöglichen und unerwünschte Kopien zu verhindern. Chip- oder Sicherheitskarten, wie z. B. Bank- oder Kreditkarten oder Ausweise, sind weitere Beispiele für ein Wertdokument.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Es zeigen:
- Fig. 1: eine perspektivische Schemadarstellung einer ersten Ausführungsform eines farbfilternden Gitters,
- Fig. 2: eine Weiterbildung des Gitters der Fig. 1,
- Fig. 3: eine Abwandlung des Gitters der Fig. 2,
- Fig. 4-5: Schemadarstellungen zur Verdeutlichung der Funktionsweise des farbfilternden Gitters,
- Fig. 6: eine Weiterbildung des Gitters der Fig. 3,

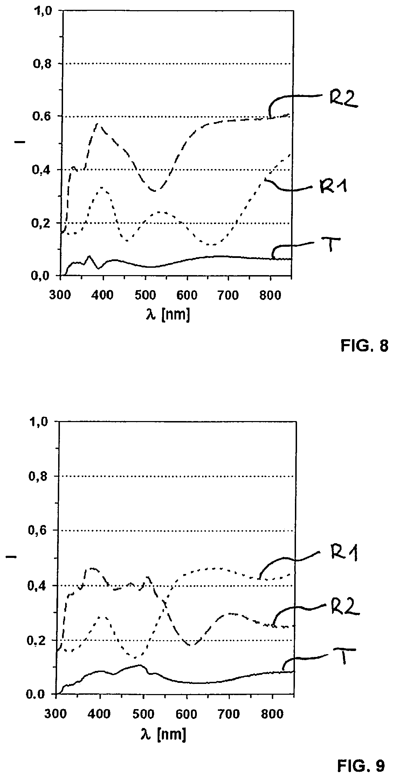

- Fig. 7-11: Diagramme hinsichtlich der Filtereigenschaften verschiedener farbfilternder Gitter,
- Fig. 12: eine Schemadarstellung zur Verdeutlichung eines farbfilternden Gitters zur Bilddarstellung,
- Fig. 13-15: Diagramme zu den Filtereigenschaften verschiedener farbfilternder Gitter.

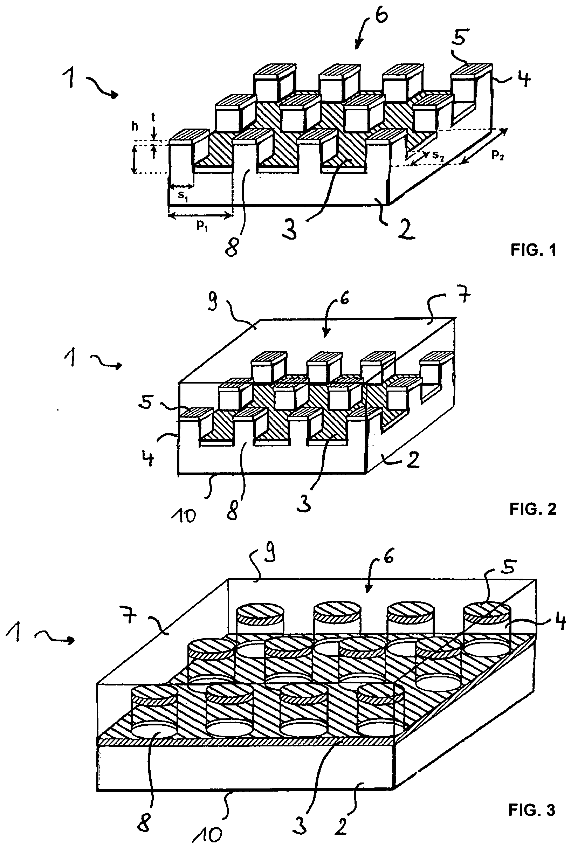

Fig. 1 zeigt ein farbfilterndes Gitter 1, das als Sicherheitselement in einem Wertdokument verwendet ist. Das farbfilternde Gitter 1 ist dadurch hergestellt, dass ein Träger 2 mit einem Profil versehen wird, das senkrechte Flanken besitzt. Der Träger 2 stellt dann eine Basisstruktur dar. Das Profil ist so ausgebildet, dass an einer Oberseite des Trägers 2 ein Muster 6 von Säulen 4 gebildet ist. Der Träger ist aus einem Dielektrikum und wurde mit einer Metallschicht 3 beschichtet, die sich in einer Grundschicht 3 auf der Oberfläche des Trägers 2 sowie in einer Beschichtung 5 auf den Säulen 4 ablegt. Aufgrund der senkrechten Flanken sind diese nicht beschichtet.

Im Muster 6 sind die Säulen 4, die hier lediglich exemplarisch als quaderförmig ausgebildet sind und u. a. zylindrische (nicht notwendigerweise kreiszylindrische) Erhebungen sein können, in Form eines zweidimensional periodischen Gitters angeordnet, wobei entlang zweier senkrecht zueinander liegender Richtungen in der durch die Grundschicht 3 definierten Gitterebene des Gitters Periodizitäten p₁ und p₂ vorhanden sind. Die Ausdehnungen der Säulen 4 bzw. der Erhebungen in der Grundebene sind mit s₁ und s₂ bezeichnet. Die Grundschicht 3 wie auch die Beschichtungen 5 haben eine Schichtdicke t. Die im Muster 6 angeordneten Beschichtungen 5 sind durch die Höhe h der Säulen 4 um den Abstand h - t von der Oberseite der Grundschicht 3 beabstandet. Die Säulenhöhe h des profilierten Trägers 2 ist dabei größer als die Schichtdicke t, so dass die Metallschicht unterbrochen ist und die Beschichtungen 5 nicht zusammenhängen. Es entsteht damit eine Metallstruktur, die aus der Grundschicht 3 besteht, welche die Gitterebene definiert, über der sich die Beschichtungen 5 befinden. Der Abstand zwischen den Beschichtungen 5 und der Grundschicht 3 ist dabei durch die dielektrischen Säulen 4 bewirkt.

Die Periodizitäten p₁ und p₂ liegen im Subwellenbereich, d. h. im Bereich zwischen 100 nm und 800 nm, bevorzugt zwischen 200 nm und 450 nm oder 600 nm. Die Füllfaktoren s₁/p₁ und s₂/p₂ liegen zwischen 0,2 und 0,8, bevorzugt zwischen 0,3 und 0,7. Um eine polarisationsunabhängige Farbfilterung zu erzielen, werden die Profilparameter für die beiden Raumrichtungen möglichst identisch gewählt, also p₁ = p₂ und s₁ = s₂. Dies ist jedoch optional. Ebenso sind im beschriebenen Ausführungsbeispiel die Periodizitätsrichtungen senkrecht zueinander. Auch dies ist optional. Auch räumlich asymmetrische Anordnungen des Profils und der Periodizität sind denkbar. Mit anderen Worten, das Muster 6 muss nicht, wie in Fig. 1 dargestellt, ein kartesisches Muster sein. Auch können die Säulen 4 asymmetrisch gestaltet sein.

Fig. 2 zeigt eine Weiterbildung, bei der das Muster 6 in ein Einbett-Dielektrikum 7 eingebettet ist. Dies hat insbesondere Anwendungsvorteile, da die Oberfläche des Gitters 1 dann glatt ist.

Fig. 3 zeigt ein Gitter 1, dessen Säulen 4 kreiszylindrisch ausgebildet sind. Diese Form eignet sich wie die Bauweise der Fig. 1 oder 2 besonders für Farbfilter für unpolarisiertes Licht. Abwandlungen von der Quadratform der Fig. 1 bzw. der Kreisform der Fig. 3 sind ebenfalls möglich, z. B. durch beispielsweise abgerundete Ecken.

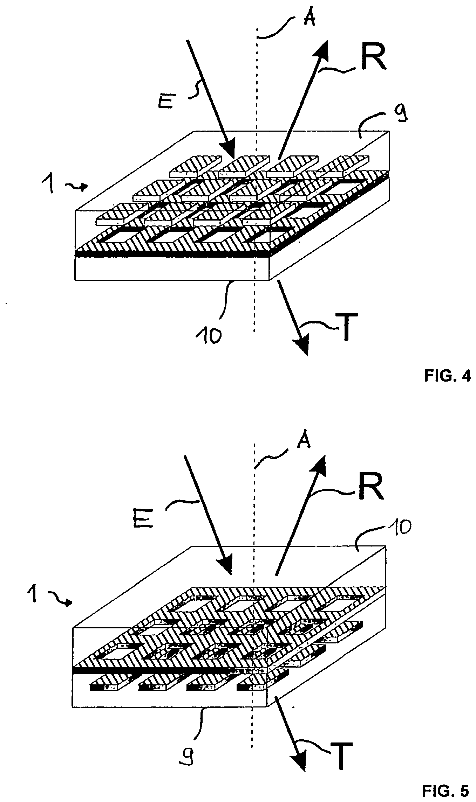

Die Fig. 3 und 4 zeigen die Wirkungsweise des Gitters 1 im Beispiel der Bauweise der Fig. 2. Fig. 4 zeigt dabei die Verhältnisse bei einfallender Strahlung E auf die Oberseite 9 des Gitters. In Fig. 5 ist der Einfall von der Unterseite 10 her gezeigt. Das Gitter 1 reflektiert einfallende Strahlung E in Form reflektierender Strahlung R und transmittiert einen Teil als transmittierte Strahlung C. Der wesentliche Unterschied zwischen der Beleuchtung von der Oberseite 9 und der Unterseite 10 liegt darin, dass von der Oberseite 9 die einfallende Strahlung E zuerst auf die im Muster 6 angeordnete, periodische Beschichtung 5 fällt. Von der Unterseite 10 wird hingegen das Muster der Löcher 8 in der Grundschicht 3 direkt beleuchtet. Dieser Unterschied hat deutliche Konsequenzen im Reflektionsverhalten, insbesondere hinsichtlich des Farbeindruckes.

Durch die Aufbringung der Metallschicht auf den strukturierten Träger 2 ist unter den Beschichtungen 5, d. h. im Bereich des Säulen 4 die Grundschicht 3 mit Öffnungen 8 versehen. Das Gitter 1 hat also ein Hole-Array in der Metallschicht 3, wobei die Anordnung der Öffnungen 8 durch das Muster 6 definiert sind. Bei vollständig senkrechten Flanken der Säule 4 entsprechen Anordnung und Größen der Öffnungen 8 exakt denen der Beschichtungen 5. Die Grundschicht 3 der Bauweise der Fig. 4 bis 5 kann jedoch auch durch Mehrfachschichten ergänzt bzw. ersetzt werden. Hier sind insbesondere Dreifachschichten (sogenannte Trilayer) möglich.

Es ist bekannt, dass mehrfach beschichtete eindimensional periodische Gitter eine starke Farbfilterfilterung durch die Ausbildung von Fabry-Perot Resonatoren sowohl in Reflexion als auch in Transmission ermöglichen. Bei Trilayer sind folgende Schichten besonders bevorzugt: zwei halbtransparente Metallschichten mit einer dazwischen liegenden dielektrische Abstandsschicht bzw. zwei hoch brechende Schichten mit einer dazwischen liegenden niedrig brechenden Schicht. Für die Metallschichten kommen folgende Materialien in Frage: Al, Ag, Pt, Pd, Au, Cu, Cr und Legierungen davon. Als hoch brechende Schichten eignen sich beispielsweise ZnS, ZnO, TiO₂, ZnSe, SiO, Ta₂O₅ oder Silizium. Als niedrig brechende Schichten bieten sich SiO₂, Al₂O₃ bzw. MgF₂ an.

Für das Herstellungsverfahren der Gitter 1 kommen verschiedenste Prozesse in Frage. Am einfachsten ist die Herstellung, wenn zuerst der dielektrische Träger 2 mit den im Muster 6 angeordneten Erhebungen, beispielsweise Säulen 4, als Basisstruktur ausgebildet und dann beschichtet wird. Das kann sowohl senkrecht, als auch in Schrägbedampfung erfolgen. Wesentlich ist, dass die Beschichtungen 5 nicht zusammenhängen, also einzeln sind.

Für die Herstellung des Trägers 2 ist ein Abformverfahren möglich, so dass eine kostengünstige Massenproduktion realisiert werden kann. Metallische Sicherheitselemente mit optisch wirksamen Prägungen sind bereits Stand der Technik. Die Prägungen sind größer als die Wellenlänge und liegen meist in einem Prägelack vor, der mit einer Metallschicht überzogen ist. Solche Sicherheitselemente werden in drei unterschiedlichen Varianten verwendet: Sicherheitsfäden, mit Effektschichten versehene, in Papier eingebettete Sicherheitsfolien, Transferstreifen (oder Patch), bei dem lediglich ein mit Effektschichten beschichteter, Prägelack auf das Substrat übertragen wird, und Laminatfolien, mit Effektschichten versehene, auf das Substrat geklebte Folien.

Eine farbige Ausgestaltung dieser Sicherheitselemente kann auf folgende Arten erfolgen: Einfärbung der Trägerfolien bzw. des Prägelacks, partieller Druck einer lasierenden Farbe unterhalb des Prägelacks, partieller Druck einer lasierenden Farbe oberhalb der Metallbeschichtung, oder Prägung von diffraktiven Elementen, wobei eine Farbgebung über die erste Beugungsordnung erfolgt (z. B. Echtfarbenhologramme).

Die oben genannten Methoden haben bei Sicherheitselementen signifikante Nachteile: eingefärbte Trägerfolien können nur für Sicherheitsfäden und Laminatfolien verwendet werden. Dabei kann nur eine Farbe wiedergegeben werden. Ferner liegen in Sicherheitselementen vielfach Transparentbereiche vor, die farblos erscheinen sollen. Eingefärbte Prägelacke erlauben ebenfalls keine Ausgestaltung der Sicherheitselemente mit klaren Transparentbereichen, da der Prägelack immer vollflächig vorliegt. Eine mehrfarbige Ausgestaltung ist ebenfalls nicht möglich. Transferelemente können beispielsweise mit einer lasierenden Farbe unterhalb des Prägelacks farbig gestaltet werden. Dies beinhaltet einerseits das Problem, dass die lasierende Farbe zu dem Prägelack eine gute Haftverbindung eingehen muss. Andererseits darf die Haftung zur Trägerfolie, auf die sie gedruckt wird, nur sehr klein sein, um den Transferprozess nicht zu beeinträchtigen. Ein weiterer Nachteil ist die schlechte Passergenauigkeit einer solchen gedruckten Farbschicht relativ zu den Effektprägungen. Da farbige Druckschichten nicht gleichzeitig im selbem Arbeitsgang mit den Prägungen erzeugt werden, entstehen Abweichungen in der Lage der beiden Schichten zueinander. Daher sind vielfach innerhalb eines solchen Motivs die gefärbten Teilflächen um mehrere Zehntel Millimeter relativ zum Prägemotiv verschoben. Bei einer Farbgebung durch diffraktive Strukturen werden zwar die oben genannten Nachteile vermieden. Jedoch ist die Farbe dieser 1. Ordnung Beugungsstrukturen sehr stark vom Betrachtungswinkel abhängig. Ein Sicherheitselement muss bezüglich der Lichtquelle im richtigen Winkel gehalten werden, um es in der dem Design entsprechenden Farbe zu sehen. In allen anderen Betrachtungssituationen erscheint es in anderen Farben. Ferner die Intensität der ersten Beugungsordnung dieser Strukturen meist niedriger im Vergleich zu der Reflexion von gedruckten Farben.

Das hier beschriebene Gitter 1 erreicht die Farbgebung z. B. von Sicherheitselementen durch eine zweidimensional periodische Subwellenlängenstruktur in der nullten Beugungsordnung. Durch die hohe Winkeltoleranz des Farbtons und die Möglichkeit der lateralen Strukturierung des Gitterprofils können alle oben genannten Nachteile vermieden werden. Die farbgebenden Prägestrukturen sind farbintensiv, können lagegenau zu anderen Sicherheitsprägestrukturen angeordnet werden und erscheinen unter einem relativ breiten Betrachtungswinkel im gewünschten gleichmäßigen Farbton.

Die Prägestrukturen können dabei einerseits komplett bestimmte Flächenbereiche des Designs füllen und so ein farbiges Bild erzeugen, oder sie können anderen Effekt-Prägestrukturen eine Farbe verleihen, indem sie in alternierenden kleinen Flächensegmenten mit den anderen Effekt-Prägestrukturen verschachtelt werden. Die farbgebenden Prägestrukturen können auch durch andere Effekt-Prägestrukturen überlagert werden. Dies ist insbesondere deshalb möglich, da viele in Sicherheitselementen verwendete Effekt-Prägestrukturen Einzelstrukturen zwischen 700 nm und 20 µm groß sind und damit störungsfrei mit den farbgebenden Prägestrukturen überlagert werden können, die typischerweise mindestens einen Faktor 2 - 10 kleiner sind.

Schließend kann die oben beschriebene Struktur in eine Sicherheitsfolie in einem Durchsichtsbereich integriert werden. Dieses Merkmal erscheint bei Betrachtung im Auflicht von Vorder- und Rückseite unter einer unterschiedlichen Farben. Die Transmission dieses Durchsichtselements kann sich dabei farblich von der Reflexion unterscheiden.

**Tabelle 1: Parameter von zweidimensional periodischen Gittern**

| **Struktur** | **p [nm]** | **s [nm]** | **h [nm]** | **t [nm]** |
|---|---|---|---|---|
| a) | 400 | 120 | 300 | 40 |
| b) | 240 | 117 | 300 | 40 |
| c) | 330 | 167 | 300 | 40 |
| d) | 400 | 203 | 310 | 40 |
| e) | 240 | 117 | 300 | 20 |
| f) | 240 | 117 | 300 | 50 / 45 / 50 |

Alle oben aufgeführten Gitter wurden auf PET-Folien in UV-Lack abgeformt, mit Aluminium bedampft und anschließend mit einer PET-Folie kaschiert. Die Brechzahl der PET-Folie sowie des UV-Lacks beträgt im Sichtbaren etwa 1,56.

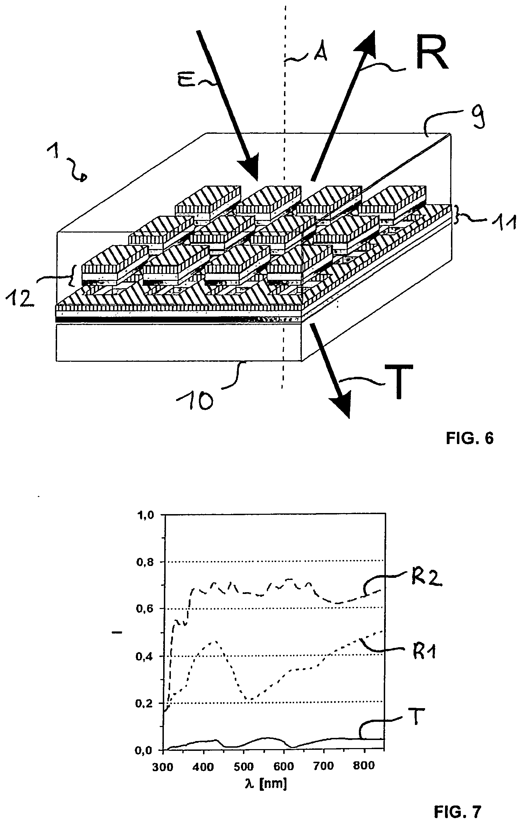

Fig. 7 zeigt Transmissions- bzw. Reflexionsverhalten für die in obiger Tabelle mit a bis d bezeichneten Strukturen. Dabei ist mit R1 der Reflexionsverlauf an der Vorderseite, mit R2 der Reflexionsverlauf an der Rückseite sowie mit T die transmittierte Strahlung bezeichnet. Die Figuren zeigen jeweils die Intensität als Funktion der Wellenlänge. Als Metall wurde Aluminium mit einer Schichtdicke t von 40 nm verwendet.

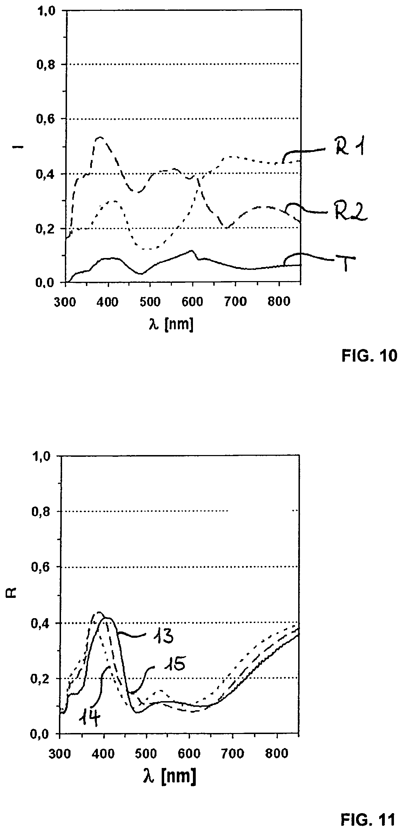

Diese Gitter zeigen sowohl in Reflexion als auch in Transmission unterschiedliche Farben. Die Reflexion an der Vorderseite unterscheidet sich ganz deutlich von der Reflexion an der Rückseite. Dies tritt am deutlichsten bei den Gittern c) und d) hervor. Das Gitter c) hat auf der Vorderseite einen roten Farbton, während die Rückseite blau erscheint. Die Transmission ist dagegen von beiden Seiten betrachtet blau. Das Gitter d) erscheint dagegen auf der Vorderseite rötlich, auf der Rückseite türkis und in Transmission grün. Die Winkeltoleranz des Farbtons wurde durch Reflexionsmessungen bei unterschiedlichen Einfallswinkeln untersucht. Fig. 11 zeigt die Reflexion des Gitters e) für die Einfallswinkel 8° (Kurve 13), 30° (Kurve 15) und 45° (Kurve 14). Das Reflexionsmaximum liegt für dieses Gitter im Blauen und verschiebt sich bei einer Variation des Einfallswinkels nur geringfügig. Das Gitter erscheint für dieses unterschiedlichen Einfallswinkel stets blau.

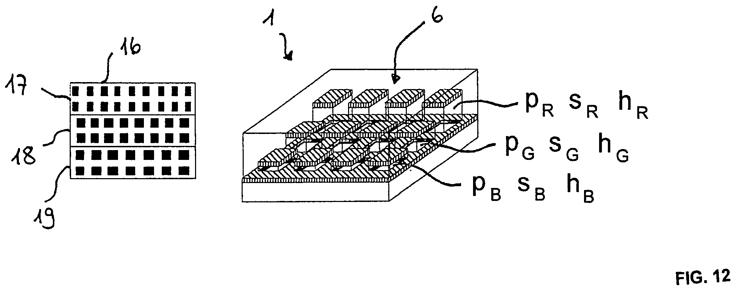

Die oben beschriebene profilabhängige Farbgebung kann benutzt werden, um farbige Symbole bzw. Bilder zu erzeugen. Fig. 12 zeigt drei Bereiche eines Gitters mit unterschiedlichem Profil (p_{R}, s_{R}, h_{R}), (p_{G}, s_{G}, h_{G}) bzw. (p_{B}, s_{B}, h_{B}), welche in den Farben rot, grün und blau erscheinen. Diese unterschiedlichen Farben können durch die entsprechende Variation eines oder mehrerer Profilpaarmeter hervorgerufen werden.

Die drei Bereiche 17, 18, 19 entsprechen RGB-Sub-Pixeln und bilden zusammen ein Pixel 16. In jedem Bereich 17, 18, 19 sorgt das jeweilige Profil dafür, dass die entsprechenden Farben rot, grün bzw. blau bewirkt werden. Gleichzeitig kann durch die Profilwahl der Anteil der Farbe des jeweiligen RGB-Sub-Pixels, das vom Bereich 17,18 oder 19 gebildet wird, im Pixel 16 eingestellt werden. Somit kann dem Pixel 16 eine gewünschte Farbe verliehen werden. Durch die im Pixel 16 bewirkte Farbmischung der Grundfarben durch die Bereiche 17, 18, 19 der RGB-Sub-Pixel werden somit Echtfarbenbilder möglich. Der Vorteil einer solchen Struktur gegenüber einer herkömmlichen Drucktechnik ist, dass eine sehr feine Strukturierung bis in den Mikrometerbereich möglich ist, was insbesondere mit Vergrößerungsanordnungen vorteilhaft ist. Das Gitter gemäß Fig. 12 erlaubt Mikrobilder, bei denen sich das Gitterprofil lateral ändert, um einen farblichen bzw. einen Intensitätskontrast im Mikrobild zu erzielen. Die hier beschriebene Struktur eignet sich dafür bevorzugt, da ihre optischen Eigenschaften sehr winkeltolerant sind, d. h. ihre Farbe ändert sich kaum bei einer Variation des Einfallswinkels. Diese Eigenschaft ist bei einer Kombination mit Mikrolinsenarrays vorteilhaft, da das von einem Betrachter wahrgenommene Licht aus unterschiedlichen Lichtpfaden, welche verschiedene Einfallswinkel haben, stammt.

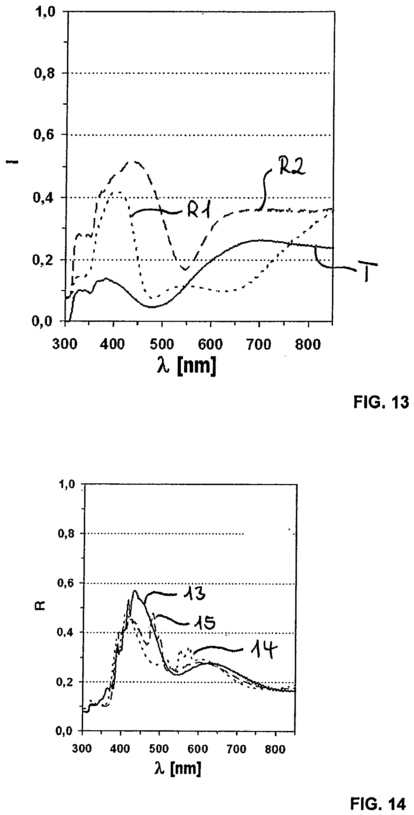

Fig. 13 zeigt Transmissions- bzw. Reflexionsverhalten des Gitters gemäß Struktur a.

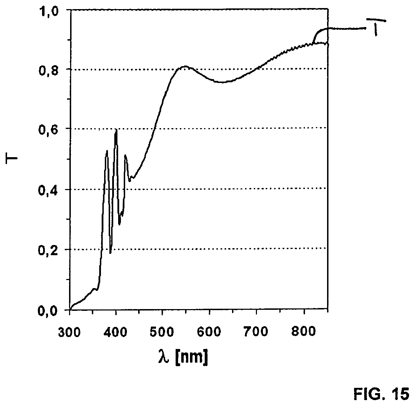

Verwendet man das Gitter mit der Trilayer-Beschichtung gemäß Fig. 6, erhält man die optischen Eigenschaften gemäß Fig. 14 und 15. Dabei weist die Trilayer-Beschichtung eine Abfolge von 50 nm ZnS, 45 nm SiO₂ und 50 nm ZnS auf. Dieses Gitter zeigt einen winkelunabhängigen blauen Farbton in Reflexion und einen gelben Farbton in Transmission. Es entspricht der Struktur f Der obigen Tabelle.

Selbstverständlich ist in vorstehender Beschreibung der Begriff "über" bzw. "unter" lediglich exemplarisch und auf die Darstellung in den Zeichnungen bezogen zu verstehen. Natürlich kann der Aufbau auch dahingehend invertiert werden, dass die Bauweise der Fig. 5 als Basis genommen wird, d. h. die Beschichtungen 5 befinden sich dann unter der Grundschicht 3. Dies hat dann besondere Auswirkung, falls durch Aufbringung des Gitters auf ein nicht transparentes Material lediglich reflektierte Strahlung zum optischen Effekt beiträgt.

### Bezugszeichenliste

- 1: Gitter
- 2: Träger
- 3: Grundschicht
- 4: Säule
- 5: Beschichtung
- 6: Muster
- 7: Dielektrikum
- 8: Öffnung
- 9: Vorderseite
- 10: Rückseite
- 11, 12: Mehrschichtaufbau
- 13, 14, 15: Kurve
- 16: Pixel
- 17, 18, 19: RGB-Sub-Pixel
- h: Säulenhöhe
- t: Beschichtungsdicke
- s₁: Säulenbreite
- s₂: Säulentiefe
- p₁, p₂: Periode
- A: Flächennormale
- E: einfallende Strahlung
- R: reflektierte Strahlung
- R1: an der Vorderseite reflektierte Strahlung
- R2: an der Rückseite reflektierte Strahlung
- T: transmittierte Strahlung

## Patentansprüche

1. Sicherheitselement für ein Wertdokument, wobei das Sicherheitselement aufweist ein zweidimensional periodisches, farbfilterndes Gitter, das eine zusammenhängende hochbrechende, insbesondere metallische, Grundschicht (3), die eine Gitterebene definiert, und über der Grundschicht (3) ein zweidimensional regelmäßiges Muster (6) aus einzelnen hochbrechenden, insbesondere metallischen, Flächenelementen (5) aufweist, die sich jeweils parallel zur Gitterebene erstrecken und jeweils von der Grundschicht (3) durch ein Zwischen-Dielektrikum (4) um einen Abstand (h) beabstandet sind, der größer ist als die Dicke der Grundschicht (3) und der Flächenelemente (5), wobei das regelmäßige Muster (6) in mindestens zwei Richtungen, die parallel zur Gitterebene verlaufen, eine Periodizität (p₁, p₂) zwischen 100 nm und 800 nm, bevorzugt zwischen 200 nm und 500 nm hat, **dadurch gekennzeichnet, dass** die Grundschicht (3) unter jedem Flächenelement (5) eine Öffnung (8) hat und das Sicherheitselement farbige Symbole oder Bilder darbietet, indem ein Flächenfüllfaktor der Flächenelemente (5) und/oder der Abstand zwischen Flächenelementen (5) und Grundschicht (3) lokal variiert.

2. Sicherheitselement nach Anspruch 1, wobei eine Gruppe mehrerer Flächenelemente (5) mit parallel zur Gitterebene identischen Abmessungen so gestaltet ist, dass ein bestimmter Farbeffekt eintritt, wobei die Gruppe ein Sub-Pixel (17, 18, 19) bildet und mehrere Sub-Pixel (17, 18, 19) durch unterschiedliche geometrische Gestaltung mit unterschiedlichen Farbeigenschaften ausgestaltet und zu einem Pixel (16) zusammengefasst sind und mehrere dieser Pixel (16) ein farbiges Bild darstellen.

3. Sicherheitselement nach Anspruch 1 oder 2, wobei die Grundschicht (3) und die Flächenelemente (5) ein Material umfassen, das enthält: Al, Ag, Cu, Cr, Si, Zn, Ti, Pt, Pd, Ta und eine Legierung daraus.

4. Sicherheitselement nach einem der obigen Ansprüche, wobei das Zwischen-Dielektrikum (4) unter jedem Flächenelement (5) als Säule ausgebildet ist, auf der das Flächenelement (5) angeordnet ist, und vorzugsweise eine Brechzahl zwischen 1,4 und 1,6 hat.

5. Sicherheitselement nach einem der obigen Ansprüche, das in ein Einbett-Dielektrikum (7) eingebettet ist, welches vorzugsweise dieselbe Brechzahl hat, wie das Zwischen-Dielektrikum (4).

6. Sicherheitselement nach einem der obigen Ansprüche, wobei das regelmäßige Muster (6) der Flächenelemente (5) einen Flächenfüllfaktor von 0,15 bis 0,85, bevorzugt von 0,3 bis 0,7 hat.

7. Sicherheitselement nach einem der obigen Ansprüche, wobei der Abstand (h), in dem die Flächenelemente (5) über der Gitterebene liegen, parallel zur Gitterebene variiert.

8. Sicherheitselement nach einem der obigen Ansprüche, das eine dielektrische Trägerschicht (2) aufweist, deren Oberseite zu einer Säulenstruktur (4) mit weitgehend senkrecht zur Gitterebene verlaufenden Flanken strukturiert ist und auf die eine hochbrechende Schicht (3, 5) so aufgebracht ist, dass die Flanken nicht vollständig beschichtet sind.

9. Sicherheitselement nach Anspruch 1, das eine Mikrobildstruktur für eine Moire-Vergrößerungsanordnung bereitstellt.

10. Wertdokument mit einem Sicherheitselement nach einem der obigen Ansprüche.

## Claims

1. Security element for a valuable document, wherein the securing element comprises a two-dimensionally periodic, colour-filtering grating comprising a continuous, in particular metallic, base layer (3) having a high refractive index, said base layer defining a grating plane, and above the base layer (3) a two-dimensional regular pattern (6) composed of individual, in particular metallic, surface elements (5) having a high refractive index, which each extend parallel to the grating plane and are each spaced apart from the base layer (3) by an intermediate dielectric (4) by a distance (h) that is greater than the thickness of the base layer (3) and of the surface elements (5), wherein the regular pattern (6) has a periodicity (p₁, p₂) of between 100 nm and 800 nm, preferably between 200 nm and 500 nm, in at least two directions extending parallel to the grating plane, **characterized in that** the base layer (3) has an opening (8) below each surface element (5) and the security element presents coloured symbols or images by virtue of local variation of a surface filling factor of the surface elements (5) and/or the distance between surface elements (5) and base layer (3).

2. Security element according to Claim 1, wherein a group of a plurality of surface elements (5) having identical dimensions parallel to the grating plane is configured such that a specific colour effect occurs, wherein the group forms a sub-pixel (17,18,19) and a plurality of sub-pixels (17,18,19) are embodied with different colour properties by virtue of different geometric configuration and are combined to form a pixel (16) and a plurality of these pixels (16) constitute a coloured image.

3. Security element according to Claim 1 or 2, wherein the base layer (3) and the surface elements (5) comprise a material containing: Al, Ag, Cu, Cr, Si, Zn, Ti, Pt, Pd, Ta and an alloy thereof.

4. Security element according to any of the preceding claims, wherein the intermediate dielectric (4) below each surface element (5) is embodied as a column on which the surface element (5) is arranged, and preferably has a refractive index of between 1.4 and 1.6.

5. Security element according to any of the preceding claims, which is embedded into an embedding dielectric (7), which preferably has the same refractive index as the intermediate dielectric (4).

6. Security element according to any of the preceding claims, wherein the regular pattern (6) of the surface elements (5) has a surface filling factor of 0.15 to 0.85, preferably of 0.3 to 0.7.

7. Security element according to any of the preceding claims, wherein the distance (h) at which the surface elements (5) lie above the grating plane varies parallel to the grating plane.

8. Security element according to any of the preceding claims, which comprises a dielectric carrier layer (2), the top side of which is structured to form a column structure (4) having sidewalls extending substantially perpendicularly to the grating plane and on which a high refractive index layer (3, 5) is applied such that the sidewalls are not completely coated.

9. Security element according to Claim 1, which provides a microimage structure for a Moire magnification arrangement.

10. Valuable document comprising a security element according to any of the preceding claims.

## Revendications

1. Élément de sécurité pour un document de valeur, dans lequel l'élément de sécurité présente un réseau de filtrage des couleurs périodique bidimensionnel qui comporte une couche de base (3) continue à indice de réfraction élevé, en particulier métallique, définissant un plan de réseau et, au-dessus de la couche de base (3), un motif régulier (6) bidimensionnel composé d'éléments de surface (5) individuels à indice réfraction élevé, en particulier métalliques, qui s'étendent chacun parallèlement au plan de réseau et sont espacés de la couche de base (3) par un diélectrique intermédiaire (4) d'une distance (h) qui est supérieure à l'épaisseur de la couche de base (3) et des éléments de surface (5), dans lequel le motif régulier (6) a une périodicité (p1, p2) comprise entre 100 nm et 800 nm, de préférence entre 200 nm et 500 nm, dans au moins deux directions qui s'étendent parallèlement au plan de réseau,
**caractérisé en ce que** la couche de base (3) présente une ouverture (8) sous chaque élément de surface (5) et **en ce que** l'élément de sécurité présente des symboles ou des images en couleur en faisant varier localement un facteur de remplissage de surface des éléments de surface (5) et/ ou la distance entre les éléments de surface (5) et la couche de base (3).

2. Élément de sécurité selon la revendication 1, dans lequel un groupe de plusieurs éléments de surface (5) présentant des dimensions identiques parallèlement au plan de réseau est conçu de telle manière qu'un effet de couleur spécifique se produise, dans lequel le groupe forme un sous-pixel (17, 18, 19) et une pluralité de sous-pixels (17, 18, 19) sont formés par différentes configurations géométriques avec différentes propriétés de couleurs et sont regroupés pour former un pixel (16) et plusieurs desdits pixels (16) représentent une image en couleur.

3. Élément de sécurité selon la revendication 1 ou 2, dans lequel la couche de base (3) et les éléments de surface (5) comprennent un matériau qui contient : Al, Ag, Cu, Cu, Cr, Si, Si, Zn, Ti, Pt, Pt, Pd, Ta et un alliage de ceux-ci.

4. Élément de sécurité selon l'une des revendications précédentes, dans lequel le diélectrique intermédiaire (4) sous chaque élément de surface (5) est réalisé sous forme d'une colonne sur laquelle est disposé l'élément de surface (5) et possède de préférence un indice de réfraction compris entre 1,4 et 1,6.

5. Élément de sécurité selon l'une des revendications précédentes, qui est incorporé dans un diélectrique d'incorporation (7) présentant de préférence le même indice de réfraction que le diélectrique intermédiaire (4).

6. Élément de sécurité selon l'une des revendications précédentes, dans lequel le motif régulier (6) des éléments de surface (5) présente un facteur de remplissage de surface de 0,15 à 0,85, de préférence de 0,3 à 0,7.

7. Élément de sécurité selon l'une des revendications précédentes, dans lequel la distance (h) à laquelle les éléments de surface (5) se trouvent au-dessus du plan de réseau varie parallèlement au plan de réseau.

8. Élément de sécurité selon l'une des revendications précédentes, comportant une couche de support diélectrique (2) dont la face supérieure est structurée en une structure de colonne (4) comportant des flancs s'étendant sensiblement perpendiculairement au plan de réseau et sur laquelle est appliquée une couche à indice de réfraction élevé (3, 5) de telle manière que les flancs ne soient pas entièrement revêtus.

9. Élément de sécurité selon la revendication 1, qui fournit une structure de micro-image destinée à un système d'agrandissement de moiré.

10. Document de valeur comportant un élément de sécurité selon l'une des revendications précédentes.
